# EUROPÄISCHE PATENTSCHRIFT

(11) **EP 1 678 434 B1**
(45) Veröffentlichungstag und Bekanntmachung des Hinweises auf die Patenterteilung: **01.10.2008**
(21) Anmeldenummer: 04765397.7
(22) Anmeldetag: 18.09.2004
(51) Int. Cl.: F16K 17/04, F16K 17/06

(54) **VENTIL, INSBESONDERE GASSICHERHEITSVENTIL**
VALVE, ESPECIALLY A GAS SAFETY VALVE
SOUPAPE, NOTAMMENT SOUPAPE DE SECURITE A GAZ

(30) Priorität: 31.10.2003 DE 10350914
(43) Veröffentlichungstag der Anmeldung: 12.07.2006
(73) Patentinhaber: HYDAC TECHNOLOGY GMBH, D-66280 Sulzbach (DE)
(72) Erfinder: MÜLLER, Stephan, 66582 Zweibrücken (DE)
(74) Vertreter: Bartels, Martin Erich Arthur
(86) Internationale Anmeldenummer: PCT/EP2004/010507
(87) Internationale Veröffentlichungsnummer: WO 2005/052422

(56) Entgegenhaltungen:
- FR-A- 2 410 773
- GB-A- 1 446 704
- US-A- 763 208
- US-A- 2 820 474
- US-A- 3 620 501
- US-A- 5 094 266
- US-A- 5 791 373

## Beschreibung

Die Erfindung betrifft ein Ventil, insbesondere Gassicherheitsventil gemäß der Merkmalsausgestaltung des Oberbegriffs des Patentanspruches 1.

Ein derartiges Ventil ist aus der Druckschrift GB 1 446 704 bereits bekannt.

Bei den bekannten Lösungen, wie sie in einer Vielzahl von Bau- und Ausführungsformen auf dem Markt frei erhältlich sind, ist die Abdichteinrichtung, regelmäßig bestehend aus einem üblichen O-Ring aus Elastomermaterial, in einen ringförmigen Aufnahmeraum eines Aufnahmeteils eingebracht, der in der Art einer Ringnut ausgebildet die Aufnahme des O-Dichtringes ermöglicht, wobei dieser plan oder mit einem vorgebbaren Überstand mit seiner Dichtfläche mit einer Stirnfläche des Aufnahmeteils bündig abschließt bzw. vorsteht. Vorzugsweise sind bei den bekannten Lösungen die Querschnittsformen des O-Dichtringes rechteckförmig und das genannte Aufnahmeteil wirkt mit einer Druckfeder als Kraftspeicher zusammen, die den Schließ- oder Einstelldruck des Ventils vorgibt, beispielsweise in einer Größenordnung von 0 bis 370 bar. Die dahingehende Dichtfläche stützt sich im geschlossenen oder sperrenden Zustand des Ventils an einer Anlagefläche eines Anlageteils ab, das als Einschraubbauteil konzipiert fest mit dem Ventilgehäuse verbunden ist und einen Mittenkanal aufweist zur Zuführung des unter Druck stehenden Fluids, beispielsweise in Form eines Gases, sofern das Ventil als Gassicherheitsventil konzipiert ist. Steigt der Fluid- oder Gasdruck über den vorgegebenen Einstelldruck, wird das Aufnahmeteil zusammen mit der Abdichteinrichtung in Form des O-Dichtringes gegen die Wirkung der Druckfeder verfahren und der bisher abgedichtete und gesperrte fluidführende Weg ist freigegeben für den Durchtritt des Fluids (Gas) in Richtung einer Anschlußöffnung im Ventilgehäuse, beispielsweise in Form einer Abblasöffnung, sofern das Ventil ein Gassicherheitsventil ist. Nimmt der Fluid- oder Gasdruck im Mittenkanal des Anlagekörpers wieder ab, drückt der Kraftspeicher in Form der Druckfeder das Aufnahmeteil zurück in seine dichtende Stellung, bei der die Dichtfläche der Abdichteinrichtung in pressende Anlage kommt mit der Anlagefläche des genannten Anlageteils.

In Abhängigkeit der auftretenden Lastwechselzahlen, also Freigeben und Sperren des fluidführenden Weges mittels der Abdichteinrichtung, kommt es zum einen dazu, dass die freiliegende Dichtfläche starken, verschleißenden Beanspruchungen ausgesetzt ist und zum anderen hat es sich in der Praxis gezeigt, dass es zu Anhaftvorgängen der Abdichteinrichtung an dem Anlageteil kommt. Dies hat zur Folge, dass die Abdichteinrichtung aus dem Aufnahmeteil herausgezogen wird, was zum Unbrauchbarwerden der Abdichteinrichtung führt und somit die Funktionssicherheit des Ventils beeinträchtigt ist, was insbesondere dann eine Rolle spielt, wenn dieses in sicherheitstechnisch relevanten Bereichen, beispielsweise als Gassicherheitsventil, eingesetzt ist.

Durch die US 5,094,266 A ist ein gattungsgemäßes Ventil bekannt, bei dem die Abdichteinrichtung aus zwei Tellerteilen besteht, die mittels eines Schraubgewindes, das an einem freien Ende einer Ventilstange angebracht ist, gegeneinander verspannt sind, um dergestalt zwischen den Tellerteilen zwei übereinander angeordnete Dichtringe festzulegen, wobei der im Durchmesser größte Dichtring unter der Klemmkraft der Tellerventile nach außen verdrängt wird, um dergestalt die Abdichtung gegenüber einer Dichtkante eines Gegenhalteteils des Ventilgehäuses herstellen zu können. An ihrem anderen Ende stützt sich die Ventilstange an einer Druckfeder als Kraftspeicher ab, die die Abdichteinrichtung in ihrer dichtenden Stellung zu halten sucht. Aufgrund der Länge der Ventilstange und bedingt durch die Umfangsgröße der Tellerteile der Abdichteinrichtung ist nicht auszuschließen, dass diese während eines Schließvorganges bezogen auf die Längsachse des Ventils eine Kipplage einnimmt, was eine wirksame Abdichtung beeinträchtigen kann.

Zwar schlägt die US 5,791,373 A bei einer vergleichbaren Ventillösung eine mittige Abdichtung vor, bei der ein Dichtring über eine mittig angeordnete Festlegeschraube als Gegenhalteteil gegen ein Aufnahmeteil verspannt ist, das sich wiederum mit seinem freien Ende an einem federbelasteten Abstützteil abstützt, wobei die Federkraft über eine Einstelleinrichtung vorgebbar ist; allein bei dieser bekannten Lösung ist über den Dichtring der Abdichteinrichtung der flächig auf einer freien Stirnseite des Aufnahmeteils über die Kopfschraube festgelegt ist, eine verbreiterte Ringfläche gegeben, die sich an dem freien Ende eines einschraubbaren Anlegeteils abstützt, was wiederum trotz der teilweisen Führung des Aufnahmeteils in einer Umfassungswand des Anlageteils zu unbefriedigenden Dichtergebnissen führt. Auch kommt es hier wiederum zu den bereits beschriebenen unerwünschten Anhaftvorgängen.

Ausgehend von diesem Stand der Technik liegt der Erfindung die Aufgabe zugrunde, in jedem Betriebszustand des Ventils dessen Funktionssicherheit zu gewährleisten, ohne dass sich hierbei die Herstellkosten für das Ventil gegenüber den bekannten Lösungen erhöhen. Ferner soll mit dem erfindungsgemäßen Ventil die Wartungs- und Service-Freundlichkeit erhöht werden. Eine dahingehende Aufgabe löst ein Ventil mit den Merkmalen des Patentanspruches 1 in seiner Gesamtheit.

Dadurch, dass gemäß dem kennzeichnenden Teil des Patentanspruches 1 das Aufnahmeteil über seine zapfenartige Verlängerung in einer Mittenbohrung der Zwischenwand längsverfahrbar geführt ist, dass die zapfenartige Verlängerung des Aufnahmeteils an einer Leitfläche des Abstützteils angreift, an dem die Druckfeder sich abstützt, dass das Gegenhalteteil in der Art einer Senkschraube ausgebildet ist, die mit ihren konisch zulaufenden Kopfflächen die Abdichteinrichtung in den Aufnahmeraum des Aufnahmeteils preßt, und dass mit zunehmender Einschraubtiefe die dahingehende Preßkraft sich erhöht, ist die Abdichteinrichtung innerhalb des Aufnahmeraumes des Aufnahmeteils gekammert und derart dort in ihrer Lage verpreßt oder verspannt, dass selbst bei Anhaftvorgängen der Dichtfläche an der Anlagefläche des Anlageteils die Abdichteinrichtung nicht aus dem Aufnahmeraum ungewollt herausgezogen werden kann.

In praktischen Versuchen hat sich auch gezeigt, dass selbst bei sehr hohen Zykluszahlen und kurzen Zykluszeiten, bei denen der fluidführende Weg abdichtend gesperrt oder freigegeben wird, die Abdichteinrichtung in ihrer Lage innerhalb des Aufnahmeraumes im Aufnahmeteil verbleibt, so dass die Funktionssicherheit des Ventils in jedem Fall gewährleistet ist. Ferner läßt sich durch die Wahl der Einschraubtiefe die Festlegekraft für die Abdichteinrichtung in dem Aufnahmeteil definieren und die wirksame Fläche der Ringdichtung reduzieren, wobei aufgrund der pressenden Anlage an dem Gegenhalteteil die Dichtwirkung der Dichtfläche erhöht ist, die dergestalt mit einer Vorspannung in Anlage bringbar ist mit der Anlagefläche des Anlegeteils. Hierdurch ergibt sich dem Grund nach eine linienförmige Dichtberührung der genannten Teile mit erhöhter Dichtkraft. Dergestalt ist auch die schädliche Angriffsfläche der Dichtfläche für die Anlagefläche des Anlageteils reduziert, was die Dichtung schont.

Die erfindungsgemäße Lösung bietet sich insbesondere für den Einsatz in sicherheitstechnisch relevanten Bereichen an, beispielsweise für die Anwendung bei Gassicherheitsventilen, wo die gewünschte Abdichtwirkung eine große Rolle spielt. Die erfindungsgemäße Ventillösung kommt im wesentlichen mit denselben Bauteilen wie die bekannten Ventile aus, so dass sie nicht teurer in der Realisierung ist und aufgrund ihrer lang andauernden Funktionssicherheit sind Wartungs- und Servicearbeiten reduziert, so dass insgesamt die erfindungsgemäße Lösung als wartungs- und servicefreundlich anzusehen ist.

Weitere vorteilhafte Ausführungsformen des erfindungsgemäßen Ventils sind Gegenstand der weiteren Unteransprüche.

Im folgenden wird das erfindungsgemäße Ventil anhand der Zeichnung näher erläutert. Dabei zeigen in prinzipieller und nicht maßstäblicher Darstellung die
- Fig.1: einen Längsschnitt durch das Ventil, ausgebildet in der Art eines Gassicherheitsventils;
- Fig.2: gleichfalls im Längsschnitt eine vergrößerte Darstellung des Aufnahmeteils nach der Fig.1 in vertikaler Anordnung.

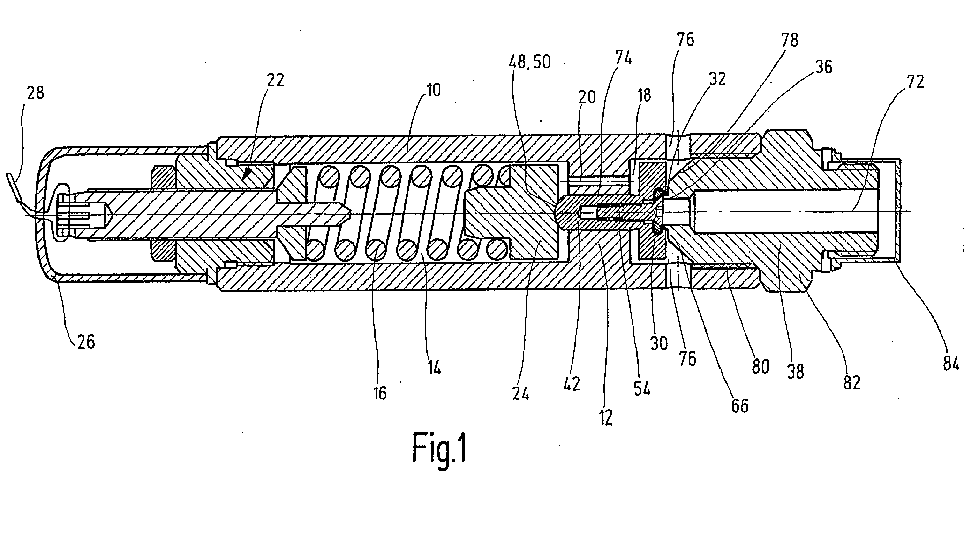

Das in der Fig.1 im Längsschnitt dargestellte Ventil stellt ein sog. Gassicherheitsventil dar mit einem Ventilgehäuse 10, das in Blickrichtung auf die Fig.1 gesehen im rechten Winkel von einer Zwischenwand 12 unterteilt ist. Die dahingehende Zwischenwand 12 unterteilt das Ventilgehäuse 10 in eine Aufnahmekammer 14 für die Aufnahme eines Kraftspeichers in Form einer Druckfeder 16 sowie in eine Fluidkammer 18. Zur Vermeidung von Betätigungshemmnissen sind Aufnahmekammer 14 und Fluidkammer 18 über eine die Zwischenwand 12 durchgreifende Ausgleichsbohrung 20 miteinander verbunden. Die Druckfeder 16 stützt sich mit ihrem einen freien Ende in Blickrichtung auf die Fig.1 gesehen linksseitig an einer als Ganzes mit 22 bezeichneten Einstelleinrichtung ab und mit ihrem anderen Ende an einem Abstützteil 24. Der dahingehende Aufbau ist bei Gassicherheitsventilen üblich, so dass an dieser Stelle hierauf nicht mehr näher im Detail eingegangen wird. Um die Einstelleinrichtung 22 vor einer ungewollten Einstellung zu schützen, ist diese nach außen hin mit einer Kappe 26 versehen und im übrigen über eine Plombe 28 gesichert.

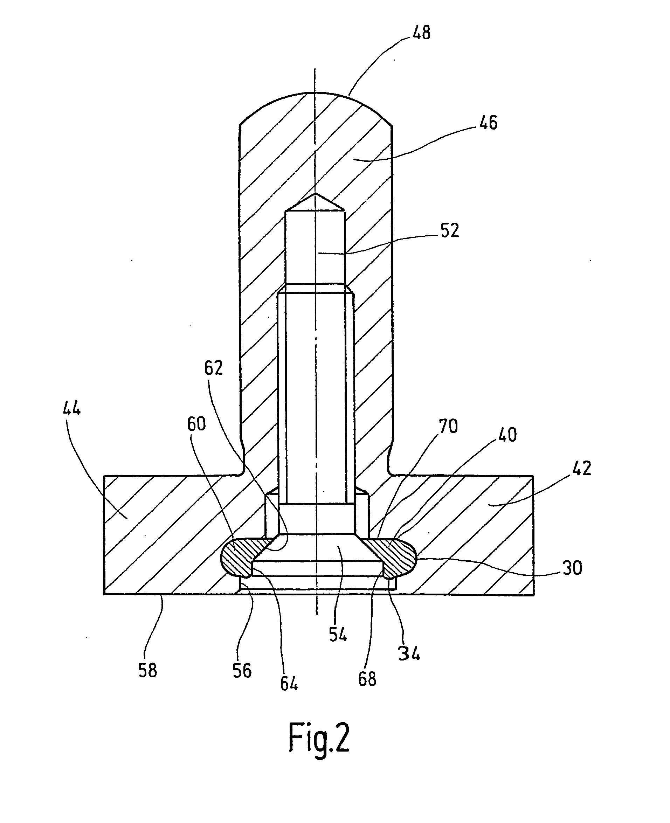

Das Ventil weist des weiteren eine Abdichteinrichtung 30 auf, die dazu dient, einen fluidführenden Weg 32 abdichtend zu sperren oder freizugeben. Zum dahingehenden Abdichten ist die Abdichteinrichtung 30 mit einer stirnseitig freiliegenden Dichtfläche 34 versehen (s. Fig.2), die in Anlage bringbar ist mit einer Anlagefläche 36 eines Anlageteils 38. Ferner ist die Abdichteinrichtung 30 ansonsten in einem Aufnahmeraum 40 eines Aufnahmeteils 42 eingesetzt. Das genannte Aufnahmeteil 42 weist an seinem einen Ende einen Ringflansch 44 auf, der zum anderen Ende hin mit einer zapfenartigen Verlängerung 46 versehen ist. Ferner weist das Aufnahmeteil 42 an seinem dem Kraftspeicher (Druckfeder 26) zugewandten Ende eine konvex ausgebildete Führungsfläche 48 auf zum permanenten Angriff an eine entsprechend konkav ausgebildete Leitfläche 50 des Abstützteils 24, an dem sich wiederum der Kraftspeicher (Druckfeder 16) abstützt.

Der in der Fig.2 näher dargestellte Aufnahmeraum 40 besteht im wesentlichen aus einem nutartigen Aufnahmekanal im Ringflansch 44, wobei der Aufnahmeraum 40 nach innen hin gerichtet in eine Einschrauböffnung 52 mündet, die vorgesehen ist für die Aufnahme eines Gegenhalteteils 54 realisiert in der Art einer Senkkopfschraube. Der genannte Aufnahmeraum 40 mündet nach innen hin in die Einschrauböffnung 52, wobei diese in Bli ckrichtung auf die Fig.2 gesehen von oben nach unten hin für die Aufnah me der Senkkopfschraube 54 absatzartig verbreitert ist. Insbesondere ist das untere Ende des Aufnahmeraumes 50 um eine vorgebbare Wegstrecke 56 als sog. Einschraubtiefe versetzt angeordnet. Um die dahingehende Wegstrecke 56 ist die ringförmige Dichtfläche 34 der Abdichteinrichtung 30 gegenüber der unteren freien Stirnfläche 58 versetzt angeordnet, so dass diese durch den genannten Rückversatz entsprechend vor Beschädigungen, Verschleiß und Abrieb entsprechend geschützt ist. Die Abdichteinrichtung 30 besteht dem Grunde nach aus einem ringförmigen Dichtmittel 60, insbesondere aus einem O-Ring aus Elastomermaterial, wie beispielsweise Nitrilkautschuk (NBR). Andere Querschnittsgeometrien sind hier denkbar, beispielsweise Dichtmittel 60 mit einem Dichtring mit quadratischem Querschnitt.

Die in der Fig.2 dargestellte Verformung ergibt sich daraus, dass im eingeschraubten Zustand des Gegenhalteteils 54 in Form der Senkkopfschraube, insbesondere aufgrund des Einflusses der konisch zulaufenden Kopfflächen 62, das Dichtmittel 60 verpreßt wird und dergestalt den Kopfflächen 62 nachfolgt. Die Abdichteinrichtung 30 wird dabei durch das Gegenhalteteil 54 derart in den Aufnahmeraum 40 des Aufnahmeteils 42 gepreßt, dass mit zunehmender Einschraubtiefe auch die dahingehende Preßkraft sich erhöht. Dabei wird das Gegenhalteteil 54 so lange in das Aufnahmeteil 42 eingeschraubt, bis die ringförmige Dichtfläche 34 aus einem Dichtspalt 64 zwischen Gegenhalteteil 54 und Aufnahmeteil 42 austritt.

Zur Bildung des Dichtsitzes ist das Anlageteil 38 an seinem dem Aufnahmeteil 42 zugewandten Ende mit einem Ringflansch 66 (s. Fig.1) versehen, der auf seiner freien Seite die bereits genannte Anlagefläche 36 ausbildet, die mit der ringförmigen Dichtfläche 34 zusammenwirkt, wobei sich dergestalt eine Art Linienberührung zwischen den genannten Flächen 34,36 ergibt. Um das Gegenhalteteil 54 in seiner Position zu sichern, kann eine Sicherung mittels eines üblichen Klebstoffmittels (Loctite) vorgesehen sein. Zusätzlich stützt sich das Dichtmittel 60 an einer ringförmigen Fläche 68 der Senkkopfschraube ab im Bereich zwischen der freien Außenseite derselben und der konisch zulaufenden Kopffläche 62. Hieraus ergibt sich im verspannten Zustand für das Dichtmittel 60 eine Form mit einer konvexen Wölbung in Richtung des Aufnahmeraumes 40 in der Art einer stegartigen Verlängerung unter Bildung der linienförmigen Dichtfläche 34, sowie geradlinig verlaufende Flächenanteile im Bereich der Kopffläche 62 sowie der ringförmigen Fläche 68 der Senkkopfschraube und in Form einer parallel zur freien Stirnfläche 58 des Ringflansches 44 verlaufenden Abstützfläche 70 (s. Fig.2).

Das Anlageteil 38 weist einen Mittenkanal 72 auf, der der Zufuhr des unter Druck stehenden Fluids (Gas) dient, wobei bei einem durch den Kraftspeicher (Druckfeder 16) vorgebbaren Öffnungsdruck (zwischen 0 bis 350 bar) die Abdichteinrichtung 30 den fluidführenden Weg 32 freigibt, indem das Aufnahmeteil 42 gegen die Wirkung der Druckfeder 16, also in Blickrichtung auf die Fig.1 gesehen nach links verschoben wird und dabei von dem Ventilsitz in Form des Ringflansches 66 des Anlageteils 38 abhebt. Der maximal freie Verfahrweg für das Aufnahmeteil 42 ergibt sich dabei durch den Anschlag des Ringflansches 44 an der Zwischenwand 12.

Um Hemmungen im Betrieb zu vermeiden, sind die Führungsfläche 48 sowie die Leitfläche 50 konvex bzw. konkav ausgebildet, so dass ein Querversatz bei der Verschiebebewegung des Aufnahmeteils 42 während seiner Verfahrbewegung innerhalb der Kammerwand 12 über die in der Mittenbohrung 74 der Zwischenwand 12 geführten zapfenartigen Verlängerung 46 ausgeglichen werden kann. Ist der genannte fluidführende Weg 32 freigegeben, mündet dieser in Abblasöffnungen 76 im Ventilgehäuse 10, die insoweit diametral einander gegenüberliegend die Ventilgehäusewand durchgreifen. Zur Erleichterung der dahingehenden Abströmbewegung für das Fluid ist das Anlageteil 38 in Richtung seines Ringflansches 66 mit einer konisch zulaufenden Führungsfläche 78 ausgestattet, die insoweit die Ansteuerung für den Ringflansch 44 des Aufnahmeteils 42 erleichtert. Fällt der Druck im Mittenkanal 72 wieder ab, schließt unter dem Einfluß der Druckfeder 16 die Dichteinrichtung und der fluidführende Weg 32 ist wiederum gesperrt, wobei die dahingehende Sperrstellung Gegenstand der Darstellung nach der Fig.1 ist.

Das genannte Anlageteil 38 ist über eine Einschraubstrecke 80 in das freie Ende des Ventilgehäuses 10 eingeschraubt und stützt sich mit einer flanschartigen Verbreiterung 82 am freien Ende des Ventilgehäuses 10 ab. Ferner ist im verkaufsfähigen Zustand des Gassicherheitsventils die Öffnung des Mittenkanals 72 mit einer Schutzkappe 84 abgedeckt, die vor Montage des Ventils in den Gassicherheitskreis entsprechend entfernt wird. Da das Aufnahmeteil 42 hemmfrei in der Zwischenwand 12 über seine zapfenartige Verlängerung 46 geführt ist, kann der Ringflansch 44 des Aufnahmeteils 42 gegenüber der Innenwand der Fluidkammer 18 einen entsprechenden Radialabstand aufweisen.

Mit dem erfindungsgemäßen Ventil und seiner Abdichteinrichtung 30 ist ein sicher funktionierendes Konzept realisiert und es ist in jedem Fall sichergestellt, dass durch die Gegenhaltung das Dichtmittel 60 nicht den ihm zugewiesenen Aufnahmeraum 40 ungewollt verlassen kann.

## Patentansprüche

1. Ventil, insbesondere Gassicherheitsventil, mit einem Ventilgehäuse (10), das von einer Zwischenwand (12) in eine Aufnahmekammer (14) für die Aufnahme eines Kraftspeichers in Form einer Druckfeder (16), sowie in eine Fluidkammer (18) unterteilt ist, wobei die Druckfeder (16) sich mit ihrem einen freien Ende an einer Einstelleinrichtung (22) abstützt und mit ihrem anderen Ende an einem Abstützteil (24), und mit einem mittels einer Abdichteinrichtung (30) abzudichtenden, fluidführenden Weg (32), die zum dahingehenden Abdichten mit einer Dichtfläche (34) versehen ist, die in Anlage bringbar ist mit einer Anlagefläche (36) eines Anlageteils (38) und die zumindest teilweise in einem Aufnahmeraum (40) eines Aufnahmeteils (42) eingesetzt ist, wobei die Abdichteinrichtung (30) innerhalb des Aufnahmeraumes (40) **dadurch** fixiert ist, dass ein Gegenhalteteil (54) durch Verbindung mit dem Aufnahmeteil (42) in Anlage bringbar ist mit der Abdichteinrichtung (30), wobei das Gegenhalteteil (54) in der Art einer Senkschraube ausgebildet ist, die mit ihren konisch zulaufenden Kopfflächen (62) die Abdichteinrichtung (30) in den Aufnahmeraum (40) des Aufnahmeteils (42) preßt, und dass mit zunehmender Einschraubtiefe (56) die dahingehende Preßkraft sich erhöht **dadurch gekennzeichnet, dass** das Aufnahmeteil (42) über seine zapfenartige Verlängerung (46) in einer Mittenbohrung (74) der Zwischenwand (12) längsverfahrbar geführt ist, dass die zapfenartige Verlängerung (46) des Aufnahmeteils (42) an einer Leitfläche (50) des Abstützteils (24) angreift, an dem die Druckfeder (16) sich abstützt.

2. Ventil nach Anspruch 1, **dadurch gekennzeichnet, dass** die Abdichteinrichtung (30) aus einem ringförmigen Dichtmittel (60) gebildet ist, insbesondere aus einem O-Ring aus Elastomermaterial, wie Nitrilkautschuk.

3. Ventil nach Anspruch 1 oder 2, **dadurch gekennzeichnet, dass** das Anlageteil (38) feststehend mit dem Ventilgehäuse (10) verbunden ist und dass das Gegenhalteteil (54) mittels einer Schraubverbindung innerhalb des Aufnahmeteils (42) festlegbar ist.

4. Ventil nach einem der Ansprüche 1 bis 3, **dadurch gekennzeichnet, dass** das Gegenhalteteil (54) so lange in das Aufnahmeteil (42) eingeschraubt wird, bis die ringförmige Dichtfläche (34) aus einem Dichtspalt (64) zwischen Gegenhalteteil (54) und Aufnahmeteil (42) linienförmig austritt.

5. Ventil nach Anspruch 4, **dadurch gekennzeichnet, dass** das Anlageteil (38) an seinem dem Aufnahmeteil (42) zugewandten Ende mit einem Ringflansch (66) versehen ist, der auf seiner freien Seite die Anlagefläche (36) ausbildet, die mit der ringförmigen Dichtfläche (34) zusammenwirkt.

6. Ventil nach einem der Ansprüche 1 bis 5, **dadurch gekennzeichnet, dass** das Anlageteil (38) einen Mittenkanal (72) aufweist, der der Zufuhr des unter Druck stehenden Fluids dient und dass bei einem durch den Kraftspeicher (Druckfeder (16)) vorgebbaren Öffnungsdruck die Abdichteinrichtung (30) den fluidführenden Weg (32) freigibt.

7. Ventil nach einem der Ansprüche 1 bis 6, **dadurch gekennzeichnet, dass** der fluidführende Weg (32) in mindestens eine Abblasöffnung (76) des Ventilgehäuses (10) mündet.

8. Ventil nach einem der Ansprüche 1 bis 7, **dadurch gekennzeichnet, dass** das Anlageteil (38) in Richtung seines Ringflansches (66) mit einer konisch zulaufenden Führungsfläche (78) für das Fluid versehen ist.

9. Ventil nach einem der Ansprüche 1 bis 8, **dadurch gekennzeichnet, dass** das Aufnahmeteil (42) an seinem dem Kraftspeicher (Druckfeder 16)) zugewandten Ende mit einer konvex ausgebildeten Führungsfläche (48) versehen ist zum Angriff an eine entsprechend konkav ausgebildete Leitfläche (50) des Abstützsteils (24).

## Claims

1. Valve, in particular gas safety valve, having a valve housing (10), which is divided by a partition (12) into a receiving chamber (14) for receiving an energy storage device in the form of a compression spring (16), along with a fluid chamber (18), wherein the compression spring (16) is supported by its one free end on an adjustment device (22) and by its other end on a support part (24), and having a fluid conducting path (32) to be sealed by means of sealing device (30), which for the pertinent sealing is provided with a sealing surface (34), which is able to be brought into contact with an abutment surface (36) of an abutment part (38) and which is inserted at least partially into a receiving space (40) of a receiving part (42), wherein the sealing device (30) is fixed inside the receiving space (40), so that a retention part (54) is able to be brought into contact with the sealing device (30), by being joined to the receiving part (42), wherein the retention part (54) is designed in the manner of a countersunk screw, which with their conically tapered heads (62) presses the sealing device (30) into the receiving space (40) of the receiving part (42), and the pertinent compression force rises with increasing screw-in depth (56), **characterised** wherein the receiving part (42) is guided via its pin-like extension (46) into a centre hole (74) in the partition (12) able to run longitudinally, and the pin-like extension (46) of the receiver part (42) engages with a conducting surface (50) of the support part (24), on which the pressure spring (16) is supported.

2. Valve according to claim 1 **characterised** wherein the sealing device (30) is formed from an annular sealing material (60), in particular from an O-ring made of elastomeric material, such as nitrile rubber.

3. Valve according to claim 1 or 2, **characterised** wherein the abutment part (38) is joined rigidly with the valve housing (1)) and the retention part (54) is able to be fixed inside the receiving part by means of a screw connection.

4. Valve according to claims 1 to 3, **characterised** wherein the retention part (54) is screwed far enough into the receiving part (42), until the annular sealing surface (34) emerges filamentarily from a sealing gap (64) between retention part (54) and receiving part (42)

5. Valve according to claim 4, **characterised** wherein the abutment part (38) is provided with an annular flange (66) at its end facing the receiving part (42), which forms the abutment surface (36) on its free side, which works in combination with the annular sealant (34).

6. Valve according to one of the claims 1 to 5, **characterised** wherein the abutment part (38) exhibits a central channel (72), which serves to feed the pressurised fluid and at an opening pressure able to be preset by the energy storage device (compression spring (16)) the sealing device (30) releases the fluid conduction path (32).

7. Valve according to one of the claims 1 to 6, **characterised** wherein the fluid conduction path (32) discharges into at least one vent opening (76) in the valve housing (10).

8. Valve according to one of the claims 1 to 7, **characterised** wherein the abutment part (38) is provided with a conically tapered guidance surface (78) for the fluid, in the direction of its annular flange (66)

9. Valve according to one of the claims 1 to 8, **characterised** wherein the receiving part (42) is provided with a convex designed guidance surface (48) at its end facing the energy storage device (compression spring (16)) for engaging in a corresponding concave designed conducting surface (50) of the support part (24).

## Revendications

1. Soupape, notamment soupape de sécurité pour du gaz, comprenant un corps (10) de soupape, qui est subdivisé par une cloison (12) en une chambre (14) de réception d'un accumulateur de force sous la forme d'un ressort (16) de compression, ainsi qu'en une chambre (18) pour du fluide, le ressort (16) de compression s'appuyant par l'une de ses extrémités libres sur un dispositif (22) de réglage et par son autre extrémité sur une partie (24) d'appui, et comprenant un trajet (32) de passage de fluide à rendre étanche au moyen d'un dispositif (30) d'étanchéité et muni, pour l'étanchéité, d'une surface (34) d'étanchéité qui peut être mise en contact avec une surface (36) de contact d'une partie (38) de contact et qui est insérée au moins en partie dans un espace (40) de réception d'une partie (42) de réception, le dispositif (30) d'étanchéité étant immobilisé à l'intérieur de l'espace (40) de réception par le fait qu'une partie (54) antagoniste de retenue peut, par assemblage à la partie (42) de réception, être mise en contact avec le dispositif (30) d'étanchéité, dans lequel la pièce (54) antagoniste de retenue est constituée à la manière d'une vis à tête conique qui, par sa surface (62) de tête conique, presse le dispositif (30) d'étanchéité dans l'espace (40) de réception de la partie (42) de réception et en ce que la force de pression augmente au fur et à mesure qu'augmente la profondeur (56) de vissage, **caractérisée en ce que** la partie (42) de réception est guidée de manière à pouvoir être déplacée longitudinalement sur son prolongement (46) en forme de tenon dans un trou (74) médian de la cloison (12), **en ce que** le prolongement (46) en forme de tenon de la partie (42) de réception attaque une surface (50) de guidage de la partie (24) d'appui, sur laquelle s'appuie le ressort (16) de compression.

2. Soupape suivant la revendication 1, **caractérisée en ce que** le dispositif (30) d'étanchéité est formé d'un moyen (60) d'étanchéité annulaire, notamment d'un joint torique en matériau élastomère, comme en caoutchouc nitrile.

3. Soupape suivant la revendication 1 ou 2, **caractérisée en ce que** la partie (38) d'appui est assemblée de manière fixe au corps (10) de soupape et **en ce que** la partie (54) antagoniste de retenue peut être fixée au moyen d'un vissage à l'intérieur de la partie (42) de réception.

4. Soupape suivant l'une des revendications 1 à 3, **caractérisée en ce que** la partie (54) antagoniste de retenue est vissée si loin dans la partie (42) de réception que la surface (34) d'étanchéité annulaire sort sous forme linéaire d'un intervalle (64) d'étanchéité entre la partie (54) antagoniste de retenue et la partie (42) de réception.

5. Soupape suivant la revendication 4, **caractérisée en ce que** la partie (38) de contact est munie sur son extrémité tournée vers la partie (42) de réception d'une bride (66) annulaire qui forme sur son côté libre la surface (36) d'appui, qui coopère avec la surface (34) d'étanchéité annulaire.

6. Soupape suivant l'une des revendications 1 à 5, **caractérisée en ce que** la partie (38) d'appui a un canal (72) médian qui sert à l'apport de fluide sous pression et **en ce que**, pour une pression d'ouverture pouvant être prescrite par l'accumulateur de force (ressort de compression) (16), le dispositif (30) d'étanchéité dégage le trajet (20) de conduite du fluide.

7. Soupape suivant l'une des revendications 1 à 6, **caractérisée en ce que** le trajet (32) de conduite du fluide débouche dans au moins une ouverture (76) de sortie du corps (10) de soupape.

8. Soupape suivant l'une des revendications 1 à 7, **caractérisée en ce que** la partie (38) de contact est munie, en direction de sa bride (66) annulaire, d'une surface (78) conique de guidage du fluide.

9. Soupape suivant l'une des revendications 1 à 8, **caractérisée en ce que** la partie (42) de réception est munie, à son extrémité tournée vers l'accumulateur de force (ressort de compression) (16), d'une surface (48) de guidage convexe pour attaquer une surface (50) de guidage, concave d'une manière correspondante, de la partie (24) d'appui.
